(19) Europäisches Patentamt / European Patent Office / Office européen des brevets

(11) **EP 3 654 519 A1**

(12) **EUROPEAN PATENT APPLICATION**

(43) Date of publication:
**20.05.2020 Bulletin 2020/21**

(51) Int Cl.:
**H02M 7/497** (2007.01)  **H02M 7/483** (2007.01)
**H02M 7/537** (2006.01)

(21) Application number: **18206153.1**

(22) Date of filing: **14.11.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **General Electric Company
Schenectady, NY 12345 (US)**

(72) Inventors:
 • **Adamczyk, Andrzej
  Stafford, Staffordshire ST16 1WS (GB)**
 • **Singhal, Sameer
  Stafford, Staffordshire ST16 1WS (GB)**

(74) Representative: **Brevalex
 95, rue d'Amsterdam
 75378 Paris Cedex 8 (FR)**

(54) **VOLTAGE SOURCE CONVERTER**

(57)     In the field of high voltage direct current (HVDC) transmission, there is provided a voltage source converter (10) which comprises first and second DC terminals (12, 14) for connection to a DC network (16). The voltage source converter (10) also includes

at least one converter limb (18) which extends between the first and second DC terminals (12, 14) and includes first and second limb portions (20, 22) that are separated by a respective AC terminal (24) which, in use, is connected to a corresponding phase of an AC network (26). Each first limb portion (20) extends between the first DC terminal (12) and corresponding AC terminal (24), and each second limb portion (22) extends between the second DC terminal (14) and corresponding AC terminal (24). Each limb portion (20, 22) includes a respective chain-link converter (28) that is defined by a plurality of series-connected switching modules (30), each of which switching module (30) includes at least one switching element and at least one energy storage device. The or each switching element of each switching module (30) is switchable to selectively insert the or each corresponding energy storage device into the corresponding limb portion (20, 22) and bypass the or each corresponding energy device in order to control a voltage across the said switching module (30). The voltage source converter (10) additionally includes a control apparatus (32) that is configured to:

(a) control the switching of the or each switching element within each switching module (30) of each chain-link converter (28), whereby each switching module (30) is operable individually to provide an instantaneous individual voltage source ($v_{sm}$) and the switching modules (30) of a given chain-link converter (28) are operable in combination to in use permit the said chain-link converter (28) to provide a stepped variable voltage source;

(b) establish a respective instantaneous chain-link reference voltage ($v_{ref}$) for each chain-link converter (28) that each respective chain-link converter (28) is required to produce at a given moment in time in order that coordinated operation of the chain-link converters (28) causes an exchange of power between the DC and AC networks (16, 26); and

(c) estimate an average switching module voltage ($v_{sm(ave)}$) for a respective chain-link converter (28) based on a ratio of instantaneous chain-link reference voltages ($v_{ref}$) the said respective chain-link converter (28) was required to produce during a selected operating period to the number of instantaneously active switching modules ($n^*$) providing an individual voltage source ($v_{sm}$) within the said respective chain-link converter (28) during the operating period.

Figure 1

**Description**

This invention relates to a voltage source converter, preferably for use in high voltage direct current (HVDC) transmission.

In HVDC power transmission networks alternating current (AC) power is typically converted to direct current (DC) power for transmission via overhead lines, under-sea cables and/or underground cables. This conversion removes the need to compensate for the AC capacitive load effects imposed by the power transmission medium, i.e. the transmission line or cable, and reduces the cost per kilometre of the lines and/or cables, and thus becomes cost-effective when power needs to be transmitted over a long distance.

The conversion between DC power and AC power is utilized in power transmission networks where it is necessary to interconnect the DC and AC networks. In any such power transmission network, converters are required at each interface between AC and DC power to effect the required conversion from AC to DC or from DC to AC. Such converters may employ voltage source converters to perform power conversion.

According to a first aspect of the invention there is provided a voltage source converter comprising:

first and second DC terminals for connection to a DC network;

at least one converter limb, the or each converter limb extending between the first and second DC terminals and including first and second limb portions separated by a respective AC terminal for connection to a corresponding phase of an AC network, each first limb portion extending between the first DC terminal and corresponding AC terminal, each second limb portion extending between the second DC terminal and corresponding AC terminal, each limb portion including a respective chain-link converter defined by a plurality of series-connected switching modules, each switching module including at least one switching element and at least one energy storage device, the or each switching element of each switching module being switchable to selectively insert the or each corresponding energy storage device into the corresponding limb portion and bypass the or each corresponding energy device in order to control a voltage across the said switching module; and

a control apparatus configured to:

(a) control the switching of the or each switching element within each switching module of each chain-link converter, whereby each switching module is operable individually to provide an instantaneous individual voltage source and the switching modules of a given chain-link converter are operable in combination to in use permit the said chain-link converter to provide a stepped variable voltage source;

(b) establish a respective instantaneous chain-link reference voltage for each chain-link converter that each respective chain-link converter is required to produce at a given moment in time in order that coordinated operation of the chain-link converters causes an exchange of power between the DC and AC networks; and

(c) estimate an average switching module voltage for a respective chain-link converter based on a ratio of instantaneous chain-link reference voltages the said respective chain-link converter was required to produce during a selected operating period to the number of instantaneously active switching modules providing an individual voltage source within the said respective chain-link converter during the operating period.

Having an estimate of the average switching module voltage for a respective chain-link converter is useful because it allows the total energy stored within the said chain-link converter to similarly be estimated which, in turn, facilitates the overall energy management control of a corresponding voltage source converter to provide the required exchange of energy between associated DC and AC networks.

In addition, estimating an average switching module voltage for a respective chain-link converter in the manner of the invention avoids the need to directly measure the voltage across each switching module within the said respective chain-link converter, and thereby simplifies considerably the aforementioned energy management control of the voltage source converter.

Furthermore, having such an estimate take into account the number of active switching modules available to provide an individual voltage source within the said respective chain-link converter during the operating period, automatically disregards any switching module which is faulty and unavailable for normal operation, rather than, e.g. having to rely on the time-consuming step of cross-checking against a faulty switching module register.

Optionally the control apparatus is configured to estimate the average switching module voltage for a respective chain-link converter by:

(i) determining an average of the instantaneous chain-link reference voltages the said respective chain-link converter was required to produce during a selected operating period;

(ii) determining an average number of instantaneously active switching modules providing an individual voltage source within the said respective chain-link converter during the operating period; and

(iii) dividing the average chain-link reference voltage during the operating period by the average number of active switching modules providing an individual voltage source during the operating period.

Having a control apparatus that utilises the steps of (i) determining an average of the instantaneous chain-link reference voltages the said respective chain-link converter was required to produce during a selected operating period, and (ii) determining an average number of instantaneously active switching modules providing an individual voltage source within the said respective chain-link converter during the same operating period, helps to ensure, given that not all of the active switching modules are utilised to provide an individual voltage source at any given instant in time, that the resulting estimate of the average switching module voltage for the said respective chain-link converter:

- is nevertheless representative of the average voltage of the entire population of active switching modules and not only of some subset of the whole switching module population; and
- is not overly sensitive to the actual number of instantaneously active switching modules providing an individual voltage source, particularly during periods when the number of instantaneously active switching modules is low.

Preferably at least one of the average of the instantaneous chain-link reference voltages ($v_{ref}$) the said respective chain-link converter was required to produce during a selected operating period and the average number of instantaneously active switching modules providing an individual voltage source within the said respective chain-link converter during the operating period is determined by applying a moving average filter to an underlying digital signal corresponding to a respective one of the instantaneous chain-link reference voltage and the number of instantaneously active switching modules, respectively.

Appling a moving average filter is advantageous because it automatically removes characteristic harmonics in the underlying digital signals that would otherwise require further signal processing to remove.

In another preferred embodiment of the invention the control apparatus is configured to estimate the average switching module voltage for a respective chain-link converter by:

(i) determining a ratio of the instantaneous chain-link reference voltage the said respective chain-link converter is required to produce to the number of instantaneously active switching modules providing an individual voltage source within the said respective chain-link converter; and
(ii) determining an average of the ratio of the instantaneous chain-link reference voltage to the number of instantaneously active switching modules during a selected operating period.

Having a control apparatus that utilises the steps of determining an average of the ratio of the instantaneous chain-link reference voltage to the number of instantaneously active switching modules during a selected operating period, again helps to ensure, given that not all of the active switching modules are utilised to provide an individual voltage source at any given instant in time, that the resulting estimate of the average switching module voltage for the said respective chain-link converter:

- is nevertheless representative of the average voltage of the entire population of active switching modules and not only of some subset of the whole switching module population; and
- is not overly sensitive to the actual number of instantaneously active switching modules providing an individual voltage source, particularly during periods when the number of instantaneously active switching modules is low.

The control apparatus, when determining a ratio of the instantaneous chain-link reference voltage to the number of instantaneously active switching modules, may be additionally configured to ensure the number of instantaneously active switching modules is greater than or equal to one.

Configuring the control apparatus in such a manner assists in further reducing the numerical sensitivity of the ratio of the instantaneous chain-link reference voltage to the number of instantaneously active switching modules.

Preferably the average of the ratio of the instantaneous chain-link reference voltage to the number of instantaneously active switching modules during the selected operating period is determined by applying a moving average filter to an underlying digital signal corresponding to the said the ratio.

Appling a moving average filter is advantageous because it automatically removes characteristic harmonics in the underlying digital signals that would otherwise require further signal processing to remove.

Preferably the control apparatus is further configured to calculate, from the estimated average switching module voltage for a respective chain-link converter, an estimate of the total energy stored by the said respective chain-link converter.

Calculating such a total energy stored desirably facilitates overall energy management control of the voltage source converter within which the associated respective chain-link converter is located.

The total energy stored may be calculated using the formula:

$$E = 0.5 \, C \, V^2$$

where,

E is a stored energy value of interest;

C is a representative capacitance value; and

V is a representative average voltage value.

In a preferred embodiment of the invention,

E is an average individual switching module stored energy;

C is an average individual switching module capacitance; and

V is the estimated average switching module voltage, and

the total energy stored by the said respective chain-link converter is obtained by multiplying the calculated average individual switching module stored energy by the total number of instantaneously active switching modules within the said respective chain-link converter during the operating period.

In another preferred embodiment of the invention,

E is total energy stored by the said respective chain-link converter;

C is an equivalent capacitance of the whole respective chain-link converter; and

V is a scaled average switching module voltage obtained by multiplying the estimated average switching module voltage by the total number of instantaneously active switching modules within the said respective chain-link converter during the operating period.

Configuring a control apparatus to calculate the total energy stored by the said respective chain-link converter using any combination of the aforementioned steps provides a practical and readily implementable way of facilitating the necessary energy management control of the voltage source converter of the invention.

Optionally the selected operating period is equal to the fundamental frequency cycle of the AC network with which the voltage source converter is, in use, associated.

Selecting such an operating period further helps to ensure that the resulting estimate of the average switching module voltage for a said respective chain-link converter is truly representative of the average voltage of all instantaneously active switching modules in the said respective chain-link converter.

In another preferred embodiment of the invention the control apparatus is still further configured to establish a limit to the instantaneous chain-link reference voltage a given chain-link converter is required to produce.

Establishing such a limit helps to ensure that a given chain-link converter only operates within its available functional envelope.

Optionally the control apparatus is configured to establish a limit to the instantaneous chain-link reference voltage according to an estimated voltage generation capacity of the said chain-link converter determined by multiplying the total number of active switching modules available to provide an individual voltage source during the operating period by the estimated average switching module voltage for the respective chain-link converter.

Establishing a limit to the instantaneous chain-link reference voltage desirably helps to prevent the said chain-link converter operating outside its available performance envelope, and so in turn helps to avoid unbalanced operation of the voltage source converter within which the said chain-link converter is located.

Moreover, deriving such a limit from the determined average number of instantaneously active switching modules providing an individual voltage source within the said respective chain-link converter during the operating period, again automatically disregards any switching module which is faulty and unavailable for normal operation, and so similarly avoids the time-consuming step of, e.g. cross-checking against a faulty switching module register.

Preferably the control apparatus includes:

at least one low-level controller programmed to control the switching of the or each switching element within each switching module of at least one chain-link converter, whereby each switching module is operable individually to provide an instantaneous individual voltage source and the switching modules of a given chain-link converter are operable in combination to in use permit the said chain-link converter to provide a stepped variable voltage source; and

a high-level controller programmed to establish the respective instantaneous chain-link reference voltage for each chain-link converter that each respective chain-link converter is required to produce in order that coordinated operation of the chain-link converters causes an exchange of power between the DC and AC networks, and

wherein at least one of the high-level controller or a low-level controller is further programmed to estimate an average switching module voltage for a respective chain-link converter.

The provision of a high-level controller and at least one low-level controller, programmed in the aforementioned manner, allows for a multi-layered energy management control regime in which, e.g. high-level control can be simplified by relying only on aggregated information regarding the energy stored in a respective chain-link converter, i.e. an estimate of the total energy stored by the said respective chain-link converter, rather than exact knowledge of the energy stored by each individual switching module within the chain-link converter.

According to a second aspect of the invention there is provided a method of operating a voltage source converter, the voltage source converter comprising:

first and second DC terminals for connection to a DC network;

at least one converter limb, the or each converter limb extending between the first and second DC terminals and including first and second limb portions separated by a respective AC terminal for connection to a corresponding phase of an AC network, each first limb portion extending between the first DC terminal and corresponding AC terminal, each second limb portion extending between the second DC terminal and corresponding AC terminal, each limb portion including a respective chain-link converter defined by a plurality of series-connected switching modules, each switching module including at least one switching element and at least one energy storage device, the or each switching element of each switching module being switchable to selectively insert the or each corresponding energy storage device into the corresponding limb portion and bypass the or each corresponding energy device in order to control a voltage across the said switching module; and

a control apparatus,

wherein the method comprises the steps of:

controlling the switching of the or each switching element within each switching module of each chain-link converter whereby each switching module is operable individually to provide an instantaneous individual voltage source and the switching modules of a given chain-link converter are operable in combination to in use permit the said chain-link converter to provide a stepped variable voltage source;

establishing a respective instantaneous chain-link reference voltage for each chain-link converter that each respective chain-link converter is required to produce at a given moment in time in order that coordinated operation of the chain-link converters causes an exchange of power between the DC and AC networks; and

estimating an average switching module voltage for a respective chain-link converter based on a ratio of instantaneous chain-link reference voltages the said respective chain-link converter was required to produce during a selected operating period to the number of instantaneously active switching modules providing an individual voltage source within the said respective chain-link converter during the operating period.

The method of the invention shares the benefits of the corresponding features of the voltage source converter of the invention.

It will be appreciated that the use of the terms "first" and "second", and the like, in this patent specification is merely intended to help distinguish between similar features (e.g. the first and second terminals), and is not intended to indicate the relative importance of one feature over another feature, unless otherwise specified.

There now follows a brief description of preferred embodiments of the invention, by way of a non-limiting example, with reference being made to the accompanying drawings in which:

Figure 1 shows a schematic view of a voltage source converter according to a first embodiment of the invention;

Figure 2 illustrates schematically the manner in which the voltage source converter shown in Figure 1 estimates an average switching module voltage; and

Figure 3 illustrates schematically the manner in which a voltage source converter according to a second embodiment of the invention estimates an average switching module voltage.

The figures are not necessarily to scale, and certain features or figures may be shown exaggerated in scale or in schematic form in the interests of clarity and conciseness.

The following embodiment of the invention is used primarily in HVDC applications, but it will be appreciated that embodiments of the invention may be applicable to other applications operating at different voltage levels.

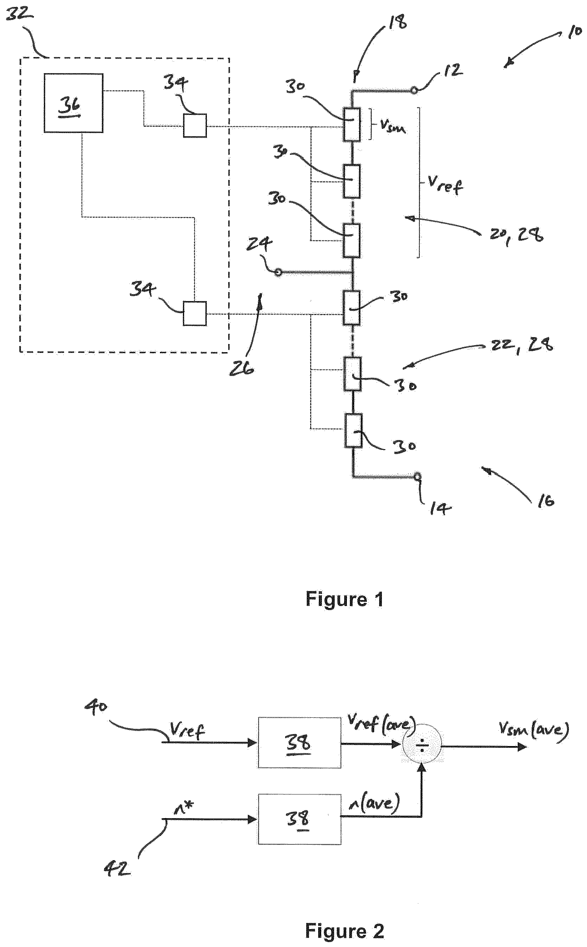

A voltage source converter according to an embodiment of the invention is shown in Figure 1 and is designated generally by the reference numeral 10.

The voltage source converter 10 includes first and second DC terminals 12, 14 which, in use, are connected to a DC network 16.

The voltage source converter 10 also includes three converter limbs 18, only one of which is shown in Figure 1. Each converter limb 18 extends between the first and second DC terminals 12, 14 and includes first and second limb portions 20, 22 which are separated by a respective AC terminal 24, again only one of which is shown in Figure 1. The AC terminals 24 are, in use, connected to a corresponding phase of a three-phase AC network 26.

In other embodiments of the invention (not shown) the voltage source converter may include fewer than or more than three converter limbs, the actual number of converter limbs corresponding to the number of phases within an associated AC network that the voltage source converter is intended, in use, to be connected with.

Each first limb portion 20 extends between the first DC terminal 12 and the corresponding AC terminal 24, while each second limb portion 22 extends between the second DC terminal 14 and the corresponding AC terminal 24.

Each limb portion 20, 22 includes a respective chain link converter 28 that is defined by a plurality of series-connected switching modules 30. Each switching module 30 includes a number of switching elements (not shown) that are connected in parallel with an energy storage device in the form of a capacitor (not shown). Each switching element includes a semiconductor device in the form of, e.g. an Insulated Gate Bipolar Transistor (IGBT), which is connected in parallel with an anti-parallel diode. It is, however, possible to use other semiconductor devices.

More particularly, in the embodiment shown each chain-link converter 28 is defined by a plurality of series-connected switching modules 30 of a first type in which first and second pairs of switching elements and a capacitor are connected in a known full bridge arrangement to define a 4-quadrant bipolar module. Switching of the switching elements selectively inserts or bypasses the capacitor into the corresponding limb portion, i.e. selectively directs current through the capacitor or causes current to bypass the capacitor, such that the first type of switching module 30 can provide zero, positive or negative voltage and can conduct current in two directions.

A second type of switching module is one in which only a first pair of switching elements is connected in parallel with a capacitor in a known half-bridge arrangement to define a 2-quadrant unipolar module. In a similar manner to the first type of switching module 30, switching of the switching elements again inserts or bypasses the capacitor into the corresponding limb portion, i.e. selectively directs current through the capacitor or causes current to bypass the capacitor, such that the second type of switching module can provide zero or positive voltage and can conduct current in two directions.

In other embodiments of the invention, one or more chain-link converters may be made up entirely of the second type of switching module, or of a combination of first and second types of switching module.

In any event, by virtue of selectively inserting or bypassing the energy storage device (i.e. the corresponding capacitor) of each switching module 30 into a corresponding limb portion to thereby control a voltage across each individual switching module 30, it is possible to build up a combined voltage across each chain-link converter 28 by combining the individual voltage available from each switching module 30.

Accordingly, the switching modules 30 of a respective chain-link converter 28 are able to work together to permit the respective chain-link converter 28 to provide a stepped variable voltage source.

In addition to the foregoing, the voltage source converter 10 of the invention includes a control apparatus 32 which is configured to carry out certain control activities associated with operation of the voltage source converter 10.

More particularly, the control apparatus 32 includes six low-level controllers 34, only two of which are shown in Figure 1. Each low-level controller 34 is programmed to control the switching of each switching element within each switching module 30 of a corresponding single chain-link converter 28, whereby each switching module 30 is operable individually to provide an instantaneous individual voltage source $v_{sm}$, and the switching modules 30 of the corresponding chain-link converter 28 are operable in combination to, in use, permit the said chain-link converter 28 to provide a stepped variable voltage source.

In other embodiments of the invention (not shown) one or more low-level controllers may be programmed to control the switching of switching elements within the switching modules of more than one chain-link converter.

Meanwhile, returning to the embodiment shown, the control apparatus 32 additionally includes a high-level controller 36 which is programmed to establish a respective instantaneous chain-link reference voltage $v_{ref}$ for each chain-link converter 28 that each respective chain-link converter 28 is required to produce at a given moment in time in order that coordinated operation of the chain-link converters 28 causes an exchange of power between the DC and AC networks 16, 26.

The high-level controller 36 is, in the embodiment shown, further programmed to estimate an average switching module voltage $v_{sm(ave)}$ for each chain-link converter 28.

In other embodiments of the invention the high-level controller may instead be further programmed to estimate an average switching module voltage for less than all of the chain-link converters within the voltage source converter with which it is associated, and/or one or more low-level controllers may be programmed to estimate an average switching module voltage for one or more of the chain-link converters which the or each low-level controller is arranged to control to generate a stepped variable voltage source.

In any event, as illustrated schematically in Figure 2, the requisite controller, i.e. the high-level controller 36 in the embodiment shown, estimates an average switching module voltage $v_{sm(ave)}$ for a respective chain-link converter 28 based on a ratio of instantaneous chain-link reference voltages $v_{ref}$ the said respective chain-link converter 28 was required to produce during a selected operating period to the number of instantaneously active switching modules $n^*$ providing an individual voltage source $v_{sm}$ within the said respective chain-link converter 28 during the operating period.

More particularly, in the embodiment shown and as illustrated schematically in Figure 2, the high-level controller 36 estimates an average switching module voltage $v_{sm(ave)}$ for a respective chain-link converter 28 by:

(i) determining an average $v_{ref(ave)}$ of the instantaneous chain-link reference voltages $v^*_{ref}$ the said respective chain-link converter 28 was required to produce during a selected operating period;

(ii) determining an average number $n_{(ave)}$ of instan-

taneously active switching modules n* providing an individual voltage source $v_{sm}$ within the said respective chain-link converter 28 during the operating period; and

(iii) determining the ratio of the average chain-link reference voltage $v_{ref(ave)}$ during the operating period to the average number of active switching modules $n_{(ave)}$ providing an individual voltage source $v_{sm}$ during the operating period.

In the aforementioned context, an active switching module 30 is one that is available for operation to instantaneously provide an individual voltage source $v_{sm}$, i.e. is not faulty or otherwise inoperative to provide such a voltage source $v_{sm}$. This is even if, at any particular instant, a given active switching module 30 does not actually provide an individual voltage source, e.g. as a result of the associated low-level controller 34 acting to evenly distribute amongst individual switching modules 30 the total energy stored by the corresponding chain-link converter 28, i.e. by altering which switching modules 30 are called upon at any given moment in time to instantaneously provide individual voltage sources $v_{sm}$ that together produce the instantaneous chain-link reference voltage $v_{ref}$ required at that particular moment in time.

In the embodiment shown, the selected operating period is equal to the fundamental frequency cycle of the AC network 26 with which the voltage source converter 10 is, in use, associated. In other embodiments, however, the operating period may be different to this.

Furthermore, in the embodiment shown, the average $v_{ref(ave)}$ of the instantaneous chain-link reference voltages $v_{ref}$ the said respective chain-link converter 28 was required to produce during a selected operating period is determined by applying a moving average filter 38 to an underlying first digital signal 40 corresponding to the instantaneous chain-link reference voltages $v_{ref}$, and the average number $n_{(ave)}$ of instantaneously active switching modules n* providing an individual voltage source $v_{sm}$ within the said respective chain-link converter 28 during the operating period is determined by similarly applying a moving average filter 38 to an underlying second digital signal 42 corresponding to the number of instantaneously active switching modules n*, although in other embodiments of the invention this need not necessarily be the case.

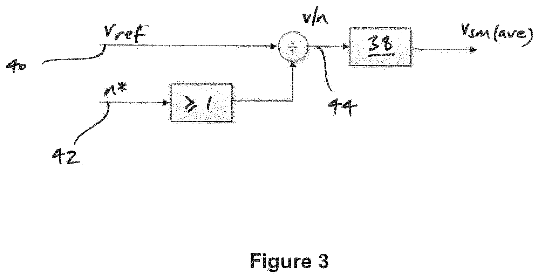

In a second embodiment of the invention the control apparatus (32) may instead be configured to estimate the average switching module voltage ($v_{sm(ave)}$) for a respective chain-link converter (28) in the manner illustrated schematically in Figure 3, i.e. by:

(i) determining a ratio v/n of the instantaneous chain-link reference voltage $v_{ref}$ the said respective chain-link converter 28 is required to produce to the number of instantaneously active switching modules n* providing an individual voltage source $v_{sm}$ within the said respective chain-link converter 28; and

(ii) determining an average of the ratio (v/n) of the instantaneous chain-link reference voltage $v_{ref}$ to the number of instantaneously active switching modules n* during a selected operating period.

The control apparatus (32) of the second embodiment of the invention is additionally configured to ensure the number of instantaneously active switching modules n* is always greater than or equal to one.

Meanwhile, in the second embodiment of the invention the average of the ratio v/n is determined by applying a moving average filter 38 to an underlying digital signal 44 corresponding to the said the ratio v/n.

Returning to the first embodiment illustrated in Figures 1 and 2, the high-level controller 36 is still further configured, i.e. still further programmed, to establish a limit to the instantaneous chain-link reference voltage $v_{ref}$ a given chain-link converter 28 is required to produce.

One way in which the high-level controller 36 may establish such a limit is according to an estimated voltage generation capacity of the said chain-link converter 28.

More particularly, the estimated voltage generation capacity of the said chain-link converter 28 may be determined by multiplying the total number of active switching modules 30 available to provide an instantaneous individual voltage source $v_{sm}$ during the operating period by the estimated average switching module voltage $v_{sm(ave)}$ for the respective chain-link converter 28.

In other embodiments of the invention, one or more low-level controllers may instead be further programmed in the foregoing manner, rather than the high-level controller.

Returning to the first embodiment, the high-level controller 36 is further configured, i.e. is still further programmed, to calculate, from the estimated average switching module voltage $v_{sm(ave)}$ for a respective chain-link converter 28, an estimate of the total energy stored by the said respective chain-link converter 28.

Such a total energy stored is calculated by the high-level controller 36 using the formula:

$$E = 0.5\, C\, V^2$$

where,

E is a stored energy value of interest;
C is a representative capacitance value; and
V is a representative average voltage value.

More particularly, in the first embodiment, the high-level controller 36 is programmed to utilise a form of the foregoing formula in which:

E is an average individual switching module stored energy;

C is an average individual switching module capacitance; and
V is the estimated average switching module voltage $v_{sm(ave)}$.

The high-level controller 36 then obtains the total energy stored by the said respective chain-link converter 28 by multiplying the calculated average individual switching module stored energy by the total number of active switching modules 30 in the associated chain-link converter 28.

In other embodiments of the invention, one or more low-level controllers may alternatively calculate the total energy stored by one or more associated chain-link converters.

In still further embodiments of the invention, one of a high-level controller or a respective low-level controller, may instead be further programmed to utilise a form of the aforementioned formula in which:

E is total energy stored by the said respective chain-link converter;
C is an equivalent capacitance of the whole respective chain-link converter; and
V is a scaled average switching module voltage obtained by multiplying the estimated average switching module voltage $v_{sm(ave)}$ by the total number of active switching modules 30 in the associated chain-link converter 28.

## Claims

1. A voltage source converter (10) comprising:

   first and second DC terminals (12, 14) for connection to a DC network (16);
   at least one converter limb (18), the or each converter limb (18) extending between the first and second DC terminals (12, 14) and including first and second limb portions (20, 22) separated by a respective AC terminal (24) for connection to a corresponding phase of an AC network (26), each first limb portion (20) extending between the first DC terminal (12) and corresponding AC terminal (24), each second limb portion (22) extending between the second DC terminal (14) and corresponding AC terminal (24), each limb portion (20, 22) including a respective chain-link converter (28) defined by a plurality of series-connected switching modules (30), each switching module (30) including at least one switching element and at least one energy storage device, the or each switching element of each switching module (30) being switchable to selectively insert the or each corresponding energy storage device into the corresponding limb portion (20, 22) and bypass the or each corresponding energy device in order to control a voltage across the said switching module (30); and
   a control apparatus (32) configured to:

   (a) control the switching of the or each switching element within each switching module (30) of each chain-link converter (28), whereby each switching module (30) is operable individually to provide an instantaneous individual voltage source ($v_{sm}$) and the switching modules (30) of a given chain-link converter (28) are operable in combination to in use permit the said chain-link converter (28) to provide a stepped variable voltage source;
   (b) establish a respective instantaneous chain-link reference voltage ($v_{ref}$) for each chain-link converter (28) that each respective chain-link converter (28) is required to produce at a given moment in time in order that coordinated operation of the chain-link converters (28) causes an exchange of power between the DC and AC networks (16, 26); and
   (c) estimate an average switching module voltage ($v_{sm(ave)}$) for a respective chain-link converter (28) based on a ratio of instantaneous chain-link reference voltages ($v_{ref}$) the said respective chain-link converter (28) was required to produce during a selected operating period to the number of instantaneously active switching modules (n*) providing an individual voltage source ($v_{sm}$) within the said respective chain-link converter (28) during the operating period.

2. A voltage source converter (10) according to Claim 1 wherein the control apparatus (32) is configured to estimate the average switching module voltage ($v_{sm(ave)}$) for a respective chain-link converter (28) by:

   (i) determining an average ($v_{ref(ave)}$) of the instantaneous chain-link reference voltages ($v^*_{ref}$) the said respective chain-link converter (28) was required to produce during a selected operating period;
   (ii) determining an average number ($n_{(ave)}$) of instantaneously active switching modules (n*) providing an individual voltage source ($v_{sm}$) within the said respective chain-link converter (28) during the operating period; and
   (iii) determining the ratio of the average chain-link reference voltage ($v_{ref(ave)}$) during the operating period to the average number of instantaneously active switching modules ($n_{(ave)}$) providing an individual voltage source ($v_{sm}$) during the operating period.

**3.** A voltage source converter (10) according to Claim 2 wherein at least one of the average ($v_{ref(ave)}$) of the instantaneous chain-link reference voltages ($v_{ref}$) the said respective chain-link converter (28) was required to produce during a selected operating period and the average number ($n_{(ave)}$) of instantaneously active switching modules (30) providing an individual voltage source ($v_{sm}$) within the said respective chain-link converter (28) during the operating period is determined by applying a moving average filter (38) to an underlying digital signal (40, 42) corresponding to a respective one of the instantaneous chain-link reference voltage ($v_{ref}$) and the number ($n^*$) of instantaneously active switching modules (30), respectively.

**4.** A voltage source converter (10) according to Claim 1 wherein the control apparatus (32) is configured to estimate the average switching module voltage ($v_{sm(ave)}$) for a respective chain-link converter (28) by:

> (i) determining a ratio ($v/n$) of the instantaneous chain-link reference voltage ($v_{ref}$) the said respective chain-link converter (28) is required to produce to the number of instantaneously active switching modules ($n^*$) providing an individual voltage source ($v_{sm}$) within the said respective chain-link converter (28); and
> (ii) determining an average of the ratio ($v/n$) of the instantaneous chain-link reference voltage ($v_{ref}$) to the number of instantaneously active switching modules ($n^*$) during a selected operating period.

**5.** A voltage source converter (10) according to Claim 4 wherein the control apparatus (32), when determining a ratio ($v/n$) of the instantaneous chain-link reference voltage ($v_{ref}$) to the number of instantaneously active switching modules ($n^*$), is additionally configured to ensure the number of instantaneously active switching modules ($n^*$) is greater than or equal to one.

**6.** A voltage source converter (10) according to Claim 4 or Claim 5 wherein the average of the ratio ($v/n$) of the instantaneous chain-link reference voltage ($v_{ref}$) to the number of instantaneously active switching modules ($n^*$) during the selected operating period is determined by applying a moving average filter (38) to an underlying digital signal (44) corresponding to the said the ratio ($v/n$).

**7.** A voltage source converter (10) according to any preceding claim wherein the control apparatus (32) is further configured to calculate, from the estimated average switching module voltage ($v_{sm(ave)}$) for a respective chain-link converter (28), an estimate of the total energy stored by the said respective chain-link converter (28).

**8.** A voltage source converter (10) according to Claim 7 wherein the total energy stored is calculated using the formula:

$$E = 0.5\,C\,V^2$$

where,

> E is a stored energy value of interest;
> C is a representative capacitance value; and
> V is a representative average voltage value.

**9.** A voltage source converter (10) according to Claim 8 where,
E is an average individual switching module stored energy;
C is an average individual switching module capacitance; and
V is the estimated average switching module voltage ($v_{sm(ave)}$), and
the total energy stored by the said respective chain-link converter (28) is obtained by multiplying the calculated average individual switching module stored energy by the total number of active switching modules (30) within the said respective chain-link converter (28) during the operating period.

**10.** A voltage source converter (10) according to Claim 8 where,
E is total energy stored by the said respective chain-link converter (28);
C is an equivalent capacitance of the whole respective chain-link converter (28); and
V is a scaled average switching module voltage obtained by multiplying the estimated average switching module voltage ($v_{sm(ave)}$) by the total number of active switching modules (30) within the said respective chain-link converter (28) during the operating period.

**11.** A voltage source converter (10) according to any preceding claim wherein the selected operating period is equal to the fundamental frequency cycle of the AC network (26) with which the voltage source converter (10) is, in use, associated.

**12.** A voltage source converter (10) according to any proceeding claim wherein the control apparatus (32) is still further configured to establish a limit to the instantaneous chain-link reference voltage ($v_{ref}$) a given chain-link converter (28) is required to produce.

**13.** A voltage source converter (10) according to Claim 12 wherein the control apparatus (32) is configured to establish a limit to the instantaneous chain-link reference voltage ($v_{ref}$) according to an estimated voltage generation capacity of the said chain-link converter (28) determined by multiplying the total number of active switching modules (30) available to provide an individual voltage source ($v_{sm}$) during the operating period by the estimated average switching module voltage ($v_{sm(ave)}$) for the respective chain-link converter (28).

14. A voltage source converter (10) according to any preceding claim wherein the control apparatus (32) includes:

at least one low-level controller (34) programmed to control the switching of the or each switching element within each switching module (30) of at least one chain-link converter (28), whereby each switching module (30) is operable individually to provide an instantaneous individual voltage source ($v^*_{sm}$) and the switching modules (30) of a given chain-link converter (28) are operable in combination to in use permit the said chain-link converter (28) to provide a stepped variable voltage source; and

a high-level controller (36) programmed to establish the respective instantaneous chain-link reference voltage ($v_{ref}$) for each chain-link converter (28) that each respective chain-link converter (28) is required to produce in order that coordinated operation of the chain-link converters (28) causes an exchange of power between the DC and AC networks (16, 26), and wherein at least one of the high-level controller (36) or a low-level controller (34) is further programmed to estimate an average switching module voltage ($v_{sm(ave)}$) for a respective chain-link converter (28).

15. A method of operating a voltage source converter (10), the voltage source converter (10) comprising:

first and second DC terminals (12, 14) for connection to a DC network (16);

at least one converter limb (18), the or each converter limb (18) extending between the first and second DC terminals (12, 14) and including first and second limb portions (20, 22) separated by a respective AC terminal (24) for connection to a corresponding phase of an AC network (26), each first limb portion (20) extending between the first DC terminal (12) and corresponding AC terminal (24), each second limb portion (22) extending between the second DC terminal (14) and corresponding AC terminal (24), each limb portion (20, 22) including a respective chain-link converter (28) defined by a plurality of series-connected switching modules (30), each switching module (30) including at least one switching element and at least one energy storage device, the or each switching element of each switching module (30) being switchable to selectively insert the or each corresponding energy storage device into the corresponding limb portion (20, 22) and bypass the or each corresponding energy device in order to control a voltage across the said switching module (30); and

a control apparatus (32),

wherein the method comprises the steps of:

controlling the switching of the or each switching element within each switching module (30) of each chain-link converter (28) whereby each switching module (30) is operable individually to provide an instantaneous individual voltage source ($v_{sm}$) and the switching modules (30) of a given chain-link converter (28) are operable in combination to in use permit the said chain-link converter (28) to provide a stepped variable voltage source;

establishing a respective instantaneous chain-link reference voltage ($v_{ref}$) for each chain-link converter (28) that each respective chain-link converter (28) is required to produce at a given moment in time in order that coordinated operation of the chain-link converters (28) causes an exchange of power between the DC and AC networks (16, 26); and

estimating an average switching module voltage ($v_{sm(ave)}$) for a respective chain-link converter (28) based on a ratio of instantaneous chain-link reference voltages ($v_{ref}$) the said respective chain-link converter (28) was required to produce during a selected operating period to the number of instantaneously active switching modules ($n^*$) providing an individual voltage source ($v_{sm}$) within the said respective chain-link converter (28) during the operating period.

Figure 1

Figure 2

V_ref

40

n*

42

≥ 1

v/n

÷

38

44

V_sm(ave)

**Figure 3**

**EP 3 654 519 A1**

Europäisches Patentamt

European Patent Office

Office européen des brevets

# EUROPEAN SEARCH REPORT

Application Number

EP 18 20 6153

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AHMED NOMAN ET AL: "Performance of the modular multilevel converter with redundant submodules", IECON 2015 - 41ST ANNUAL CONFERENCE OF THE IEEE INDUSTRIAL ELECTRONICS SOCIETY, IEEE, 9 November 2015 (2015-11-09), pages 3922-3927, XP032855891, DOI: 10.1109/IECON.2015.7392712 [retrieved on 2016-01-25] * Section 2; page 3922 * * Section 3; page 3923; figures 1,2 * * equations 4-8; page 3924 * | 1-15 | INV. H02M7/497 H02M7/483 H02M7/537 |
| A | ANTONIOS ANTONOPOULOS ET AL: "On dynamics and voltage control of the Modular Multilevel Converter", 13TH EUROPEAN CONFERENCE ON POWER ELECTRONICS AND APPLICATIONS, 2009 : EPE '09 ; 8 - 10 SEPT. 2009, BARCELONA, SPAIN, IEEE, PISCATAWAY, NJ, USA, 8 September 2009 (2009-09-08), pages 1-10, XP031541295, ISBN: 978-1-4244-4432-8 * pages 2,3,6,7; figures 1,2 * | 1-15 | |

TECHNICAL FIELDS SEARCHED (IPC)

H02M

The present search report has been drawn up for all claims

| Place of search | Date of completion of the search | Examiner |
|---|---|---|
| The Hague | 16 May 2019 | Zeljkovic, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

13